# EUROPEAN PATENT APPLICATION

(11) **EP 4 383 373 A1**
(43) Date of publication of application: **12.06.2024**
(21) Application number: 23836335.2
(22) Date of filing: 24.10.2023
(51) Int. Cl.: H01M 4/525

(54) **MULTILAYER ANNULAR HOLE NICKEL-COBALT-ALUMINUM PRECURSOR, PREPARATION METHOD FOR PRECURSOR AND POSITIVE ELECTRODE MATERIAL**

(30) Priority: 26.10.2022 CN 202211319408
(71) Applicant: Henan Kelong New Energy Co., Ltd, Xinxiang, Henan 453000 (CN)
(72) Inventor: ZHAO, Xiaojin, Xinxiang, Henan 453000 (CN); CHENG, Di, Xinxiang, Henan 453000 (CN); XU, Yunjun, Xinxiang, Henan 453000 (CN); ZUO, Gaofeng, Xinxiang, Henan 453000 (CN); HAO, Zhimin, Xinxiang, Henan 453000 (CN); WANG, Wen, Xinxiang, Henan 453000 (CN); WEN, Wanchan, Xinxiang, Henan 453000 (CN); YIN, Zhengzhong, Xinxiang, Henan 453000 (CN)
(74) Representative: De Clercq & Partners
(86) International application number: PCT/CN2023/126291
(87) International publication number: WO 2024/088271

(57) **Abstract**

The present disclosure discloses a multilayer annular pore nickel-cobalt-aluminum precursor and a preparation method and a positive electrode material thereof. The precursor D50 is 8 to 20µm. It may be seen from a section diagram that there is a plurality of layers of annular pores in a secondary spherical particle structure, and a average porosity value of the section with a single particle or a plurality of particles is 6% to 14%. A co-precipitation reaction of nickel-cobalt mixed salt solution, alkali-aluminum solution, a complexing agent, and a precipitating agent is performed, a pH value and a concentration of aluminum solution at each stage are strictly controlled, and then working procedures of solid-liquid separating, washing, drying, mixing, sieving, and demagnetizing are performed to obtain the multilayer annular pore nickel-cobalt-aluminum precursor. The loose and porous morphology of the precursor is beneficial to obtain the positive electrode material by mixed lithium sintering.

## Description

### Cross-Reference to Related Application

This application is based on Chinese Patent Application No. 202211319408.6, filed October 26, 2022, which claims the benefit of priority to the Chinese Patent Application, which is incorporated by reference in its entirety herein.

### Technical Field

The present disclosure belongs to the technical field of positive electrode materials for lithium batteries, and specifically relates to a multilayer annular pore nickel-cobalt-aluminum precursor and a preparation method and a positive electrode material thereof.

### Background

At present, due to problems such as insufficient power battery life, slow charging speed and high cost, the popularization and development of electric vehicles are restricted. The cost-performance ratio of power lithium-ion batteries greatly affects the market popularity degree of the electric vehicles. Positive electrode materials are core and key materials for the power lithium-ion batteries, the energy density of the positive electrode materials is closely related to the driving mileages of the electric vehicles, and its cost accounts for about 1/3 of the cost of a lithium-ion battery cell. Therefore, developing high energy density, long service life, high safety, and low cost positive electrode materials is crucial for large-scale commercial use of the power lithium-ion batteries and the electric vehicles.

A Nickel-Cobalt-Aluminum (NCA) material combines the advantages of LiNiOz and LiCoO₂, which has high reversible specific capacity and relatively low material cost. At the same time, the addition of aluminum enhances the structural stability and safety of the material, thereby the cycle stability of the material is improved. Therefore, the NCA material is currently one of the most popular materials researched on commercial positive electrode materials.

A technical solution disclosed in a patent with publication number of CN113651372Ato prepared a precursor with high sphericity without twin particles by an intermittent method. This solution only improved the surface morphology of the precursor and did not mention the internal spatial structure of the precursor, which may not explain the benefits of sintering the precursor to the positive electrode material effectively.

A technical solution disclosed by a patent with publication number of CN113697870B provided a precursor with a dual-core twin structure, to improve lithium ion diffusion path and lithium ion diffusion rate. From a cross-sectional electron microscope provided, the precursor was dense in internal structure, which was not beneficial to mixing and sintering with lithium salts, a plurality of the lithium ion diffusion path was formed, and it is not beneficial to the inclusion of modified elements into the surface of primary particles, This solution may also not highlight the advantages of the precursor improved.

### Summary

Based on the above problems, it is found from the present disclosure that in the research process of a nickel-cobalt-aluminum precursor, the different solubility product constants between elements may be utilized in the preparation process, and pH and aluminum solution concentration in each reaction stage may be strictly controlled to directly improve morphology of the primary particle and porosity in the internal structure of precursor particles. This method is simple in process, low in cost, and industrial production. In addition, a product obtained has good performance after being sintered.

The present disclosure provides a multilayer annular pore nickel-cobalt-aluminum precursor, it is characterized in that: a chemical formula of the precursor is Ni_{M}Co_{N}Al_{1-M-N}(OH)₂, 0.8≤M≤0.97, 0.02≤N≤0.09, 0.01≤1-M-N≤0.055, herein D50 is 8 to 20µm, and there is a plurality of layers of annular pores in a secondary spherical particle structure of the precursor, the average porosity value of the section with a single secondary spherical particle or a plurality of secondary spherical particles is 6% to 14%.

The present disclosure further provides a preparation method for the above precursor, includes the following steps:
S1, weigh an nickel sulfate and an cobalt sulfate powder, dissolve the nickel sulfate and the cobalt sulfate powder in pure water, and prepare nickel-cobalt mixed salt solution;
S2, weigh an aluminum salt, and added the aluminum salt into sodium hydroxide solution, and prepare alkali-aluminum solution;
S3, pump the nickel-cobalt mixed salt solution obtained in S1, the alkali-aluminum solution obtained in S2, and a complexing agent into a reaction kettle simultaneously, and perform a co-precipitation reaction in stages; and
S4, after complete the reaction, performing working procedures of solid-liquid separating, washing, drying, mixing, sieving, and demagnetizing on a material obtained from the reaction, to obtain the nickel-cobalt-aluminum precursor.

Further, a total metal ion concentration of the nickel-cobalt mixed salt solution in S1 is 1.0 to 2.0mol/L.

Further, the aluminum salt in S2 is sodium aluminate; a concentration of Al³⁺ in the alkali-aluminum solution is 0.1 to 0.5mol/L; and a molar concentration of the sodium hydroxide solution is 5 to 10mol/L.

Further, a concentration of the complexing agent in S3 is 10 to 15mol/L, and the complexing agent is at least one of EDTA, ammonia water, ammonium carbonate, and ammonium hydrogen carbonate.

Further, in S3, the co-precipitation reaction is performed in four stages: in first stage, it is nucleated and grown to D₁50, 25% of target value ≤ D₁50 < 40% of target value; in second stage, the secondary spherical particle in the reaction kettle is grown to D₂50, 40% of target value ≤ D₂50 < 60% of target value; in third stage, the secondary spherical particle in the reaction kettle is grown to D₃50, 60% of target value≤ D₃50 < 90% of target value; and in fourth stage, the secondary spherical particle in the reaction kettle is grown to target value, and the growth reaction is stopped immediately; and a flow rate of the nickel-cobalt mixed salt solution in each stage is 1 to 3.5L/h, a flow rate of the alkali-aluminum solution is 1 to 2L/h, a flow rate of the complexing agent is 0.5 to 1.5L/h, a pH is controlled at 10 to 12, a reaction temperature in each stage is controlled at 55 to 70°C, and a stirring rate in each stage is 500rpm to 1000rpm.

Further, in S4, the washing specifically comprises: wash the material obtained by the reaction is washed with alkali solution firstly, and then wash with deionized water at 25 to 80°C, where a resistivity of the washing water is less than 0.02cm/µs after washing; and the alkali solution is at least one of sodium carbonate solution and sodium hydroxide solution, and a molar concentration of the alkali solution is 4.0 to 5.0mol/L.

The present disclosure provides a preparation method for a positive electrode material of a lithium-ion battery, a nickel-cobalt-aluminum precursor is obtained by the above preparation method, then the precursor obtained is uniformly mixed with a lithium source and an additive, and perform first sintering, breaking, crushing, water washing and drying, coating, second sintering and sieving, to obtain the positive electrode material is.

Further, the lithium source includes, but not limited to at least one of lithium hydroxide, lithium nitrate, and lithium chloride, the additive is one or more of Zr, Sr, Ti, W, Mg, Y, La, B, and F elements, a coating agent used during the coating is an oxide-compound containing a D element or one or more of lithium compounds containing the D element, and the D element is one or more of Co, Li, B, W, Ti, Ce and Zr; a molar ratio of Ni+CO+Al to Li is 1: 1.01 to 1:1.05, and a mass ratio of the additive used to the mass sum of the precursor to the lithium salt is 0.1% to 2%. During the first sintering, it is calcined in an oxygen atmosphere furnace, where a calcining temperature is 650 to 800°C, a calcining time is 10 to 15h, a oxygen content in the atmosphere furnace is 85% to 95%, and a first sintering matrix is obtained. The first sintering matrix obtained is crushed, and washed with the deionized water, where a mass ratio of the first sintering matrix to the water is 1:1 to 1:3, and a temperature of the deionized water is 20 to 30°C, then it is centrifuged and dried, to obtain a dried matrix. The dried matrix obtained is uniformly mixed with the coating agent, herein a mass ratio of the coating agent to the dried matrix is 0.01% to 5%. After that, second sintering is performed, it is calcined in the oxygen atmosphere furnace, the calcining temperature is 500 to 700°C, the calcining time is 6 to 10h, an oxygen content in the atmosphere furnace is 90% to 95%, and the positive electrode material is obtained.

The present disclosure further provides a positive electrode material of a lithium-ion battery prepared by the above preparation method.

The beneficial effects of the present disclosure are as follows.
1. Compared with traditional positive electrode materials LiNiOz and LiCoO₂, the NCA positive electrode material has the higher energy density. Al³⁺ and Co³⁺ have the same valence state and similar ion radius (the ion radius of Al³⁺ is 0.535Å, and the ion radius of Co³⁺ is 0.545Å) . However, the bond energy of the covalent bond Al-O is stronger, so doping Al may reduce lithium nickel mixing, and it is beneficial for stabilizing the structure of the material. At the same time, the doping of Al³⁺ not only facilitates the conduction of heat generated by the decomposition of an electrolyte, but also reduces the oxidation ability of the material to the electrolyte and improves the thermal stability of the material. However, the preparation for the NCA precursor is high in technical difficulty. The difference between precipitation pH values of Ni, Co, and Al elements is relatively large, and solubility product constant of nickel hydroxide is 10⁻¹⁶, that of cobalt hydroxide is 10^{-14.9}, and that of aluminum hydroxide is 10⁻³³. Al(OH) ₃ is an amphoteric hydroxide, it is prone to precipitate at the lower pH value and decompose into AlO₂⁻¹ at the higher pH value. The present disclosure strictly controls the pH value and time of co-precipitation of the three elements at each stage, and may prepare the multilayer annular pore nickel-cobalt-aluminum precursor. This preparation method is simple in process, low in cost, and capable of industrial production.
2. Compared to traditional precursors, the secondary spherical structure of the precursor has a large internal space between the primary particles, and the positive electrode material inherits the morphology, structure, and physical index of the precursor to a large extent. The doped and coated elements of the positive electrode material prepared by the present disclosure are not only on the surface of the secondary spherical particles, but also may penetrate into annular pores to protect the primary particles that constitute the secondary spherical particles. The electrolyte may be immersed into a plurality of layers of the annular pores in the positive electrode material to expand the contact area between the positive electrode material and the electrolyte, shorten Li⁺ diffusion path, and accelerate intercalation rate and removal rate of the lithium ions, so that the battery not only has the higher initial discharge specific capacity, but also has the smaller internal resistance, and the output performance is improved. In addition, due to the presence of the plurality of layers of the annular pores, volume change of the positive electrode material in charge and discharge processes is buffered, and it plays a role in stabilizing the structure and improving cycle stability.

### Brief Description of the Drawings

Fig. 1 is a cross-sectional scanning electron microscope diagram of the precursor in Embodiment 1;
Fig. 2 is a cross-sectional scanning electron microscope diagram of the precursor in Embodiment 2;
Fig. 3 is a cross-sectional scanning electron microscope diagram of the precursor in Contrast example 1;
Fig. 4 is a cross-sectional scanning electron microscope diagram of the precursor in Contrast example 2;
Fig. 5 is a comparison diagram of rate performance of positive electrode materials prepared in Embodiments 1, 2, 3, and 4 and Contrast Embodiments 1, 2, 3, and 4;
Fig. 6 is a comparison diagram of cycle stability of the positive electrode materials prepared in Embodiments 1, 2, 3, and 4 and Contrast Embodiments 1, 2, 3, and 4; and

Table 1 is a comparison diagram of porosity, positive electrode material discharge capacity, and direct current resistance (DCR) performance of the precursors prepared in Embodiments 1, 2, 3, and 4 and Contrast Embodiments 1, 2, 3, and 4.

### Detailed Description of the Embodiments

Concepts, specific structures, and produced technical effects of the present disclosure are clearly and completely described below in combination with embodiments.

### Embodiment 1

1. A preparation method for a multilayer annular pore nickel-cobalt-aluminum precursor and sintering of a positive electrode material includes the following steps:
   S1, nickel sulfate and cobalt sulfate powder were weighed and dissolved in pure water, nickel-cobalt mixed salt solution was prepared according to a Ni: Co molar ratio of 0.875: 0.09, and the total molar concentration of metal ions in the nickel-cobalt mixed salt solution was 2.0mol/L.
   S2, sodium aluminate was weighed, and added into sodium hydroxide solution, and alkali-aluminum solution with an Al³⁺ molar concentration of 0.1mol/L was prepared.
   S3, the nickel-cobalt mixed salt solution obtained in S1, the alkali-aluminum solution obtained in S2, and 12mol/L of ammonia water (complexing agent) were simultaneously pumped into a reaction kettle for a co-precipitation reaction while being stirred. The co-precipitation reaction was divided into four stages, and the temperatures of the four stages were all controlled at 55°C. In the first stage, the nickel-cobalt mixed salt solution with a flow rate of 2.52L/h, the alkali-aluminum solution with a flow rate of 1.8L/h, and the complexing agent solution with a flow rate of 0.5 to 1.5L/h were pumped into the reaction kettle, the pH value was controlled at 11.89±0.1, the stirring rate was 850rpm, and particles in the reaction kettle were grown to 4 to 6µm of D50. In the second stage, the nickel-cobalt mixed salt solution with a flow rate of 2.45L/h, the alkali-aluminum solution with a flow rate of 1.5L/h, and the complexing agent solution with a flow rate of 0.5 to 1.5L/h were pumped into the reaction kettle, the pH value was controlled at 11.62±0.1, the stirring rate was 550rpm, and the particles in the reaction kettle were grown to 6 to 9µm of D50. In the third stage, the nickel-cobalt mixed salt solution with a flow rate of 2.55L/h, the alkali-aluminum solution with a flow rate of 1.65L/h, and the complexing agent solution with a flow rate of 0.5 to 1.5L/h were pumped into the reaction kettle, the pH value was controlled at 11.45±0.1, the stirring rate was 650rpm, and the particles in the reaction kettle were grown to 9 to 13µm. In the fourth stage, the nickel-cobalt mixed salt solution with a flow rate of 2.55L/h, the alkali-aluminum solution with a flow rate of 1.65L/h, and the complexing agent solution with a flow rate of 0.5 to 1.5L/h were pumped into the reaction kettle, the pH value was controlled at 11.65±0.1, the stirring rate was 500rpm, and it was stopped after the particles in the reaction kettle were grown to 15±1µm of D50.
   S4, overflow liquid from the reaction kettle in S3 was collected and concentrated, a material obtained by the reaction was firstly washed with sodium hydroxide solution, and then washed with deionized water at 25°C, and the resistivity of the washing water after the washing was less than 0.02cm/µs; the molar concentration of the alkali solution was 4.0 to 5.0mol/L, the drying temperature was 105°C, and the water content was controlled below 0.5wt%. The content of magnetic foreign objects in the precursor were controlled below 100ppb.
      This preparation method may obtain a nickel-cobalt-aluminum precursor Ni_{0.875}Co_{0.09}Al_{0.035}(OH)₂ with D50=15.097, porosity of 8.348, and multilayer annular pore morphology.
   S5, the nickel-cobalt-aluminum precursor obtained in S4 was uniformly mixed with a lithium salt and an additive, the lithium salt used in S5 was lithium hydroxide, and the additive was ZrO₂. The molar ratio of (Ni+CO+Al) :Li was 1:1.03, and the mass ratio of ZrO₂ to the total mass sum of the precursor and the lithium salt was 0.3%. It was sintered in an oxygen atmosphere furnace, the calcining temperature was 720°C, the calcining time was 10h, the oxygen content in the atmosphere furnace was 90% to 95%, to obtain a first sintering matrix. The first sintering matrix obtained was crushed, and washed with deionized water, where the mass ratio of the first sintering matrix to the water was 1:1.5, and the temperature of the deionized water was 25°C. Then it was centrifuged and dried to obtain a dried matrix. The dried matrix was uniformly mixed with a coating material (cerium oxide), and the mass ratio of the cerium oxide to the dried matrix was 0.1%. After that, it was calcined in the oxygen atmosphere furnace, where the calcining temperature was 650°C, the calcining time was 8h and the oxygen content in the atmosphere furnace was 90% to 95%, to obtain a positive electrode material of Li_{1.03}Ni_{0.875}Co_{0.09}Al_{0.035}Zr_{0.003}O₂@CeO₂.

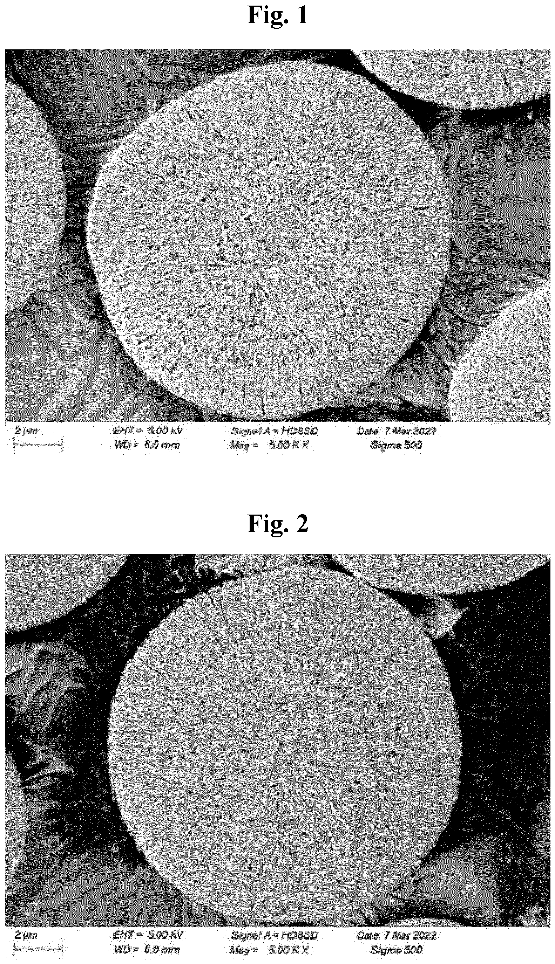

The Ni_{0.875}Co_{0.09}Al_{0.035}(OH)₂ nickel-cobalt-aluminum precursor obtained in S4 was cut by using an argon ion section plotter, the section morphology was observed by using a field emission scanning electron microscope, and testing results are shown in Fig. 1.

Particle porosity analysis was performed on a cross-sectional diagram of the precursor by using Image J, and the calculation of particle section porosity was mainly based on the proportion of pores to particles. Image J needed to copy an original image, the original image was used to extract the pore area, and the copy diagram was used to extract the particle area after the pores were filled. The ratio of the two was the porosity of the particle section. Testing results are shown in Table 1.

### 2. Electrical performance tests

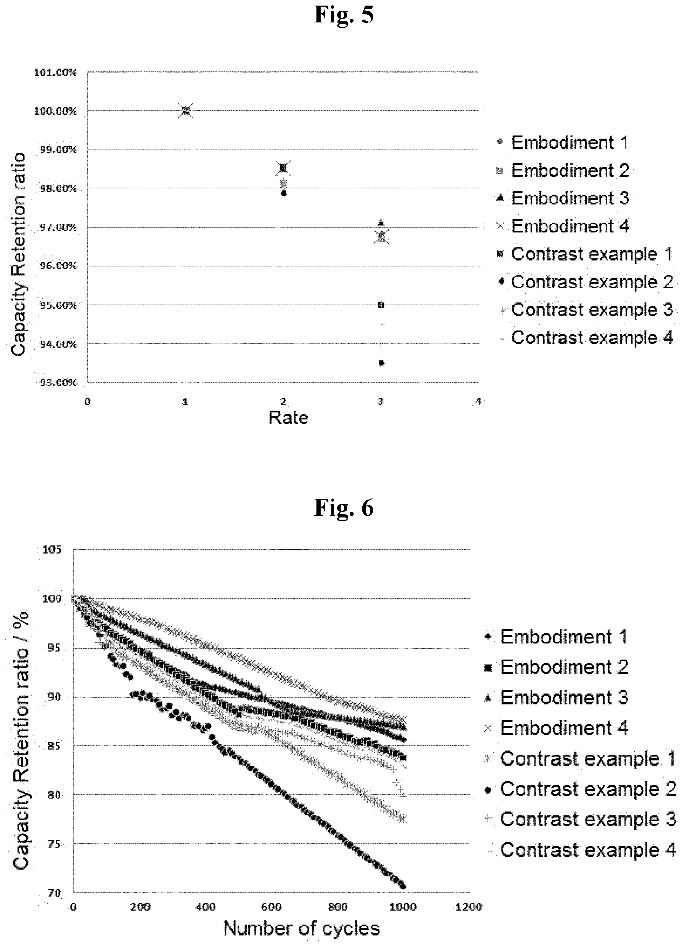

A full battery 18650 was assembled for testing the electrical performance of the positive electrode material in Embodiment 1, which included the positive electrode material (96.5%), a Super P (1.2%), a CNT (0.5%), and PVDF (1.8%); and graphite was used as a negative electrode, which included the graphite (94.8%), CMC (1.7%), SBR (2%), and Super P (1.5%), the capacity ratio of the positive/negative electrode in the full battery design was 1/1.2.
1) Capacity tests: an 18650 cylindrical battery was assembled, and then capacity grading was performed under a voltage of 2.75V to 4.2V, the initial efficiency (initial efficiency%=0.2C discharge capacity/initial charge capacity) and 0.2C discharge gram capacity were calculated respectively, and results are shown in Table 1.
2) Rate performance tests: after the capacity grading was performed on the 18650 cylindrical battery assembled, the activated battery obtained was subjected to different rate discharge tests at a room temperature of 25°C within a voltage range of 2.75V to 4.2V The charge rates were all 0.5C, and the discharge rates were 0.5C, 1C, 2C, and 3C respectively. The discharge capacity retention ratios at the different rates were calculated, and results are shown in Table 1.
3) Cycle performance tests: after the capacity grading was performed on the 18650 cylindrical battery assembled, the activated battery obtained was charged at a rate of 0.5C and discharged at a rate of 1C within the voltage range of 2.75V to 4.2V at the room temperature of 25°C. Results of capacity retention ratios are shown in Fig. 6.
4) DCR performance tests: after the capacity grading was performed on the 18650 cylindrical battery assembled, it was subjected to room temperature DCR tests. Working steps of the room temperature DCR test were as follows: the activated battery obtained was changed at the rate of 1C within the voltage range of 2.75V to 4.2V at the room temperature of 25°C, it was stilly placed, and then it was discharged at the rate of 1C to 50% State-of-Charge (SOC) and 10% SOC, it was stilly placed, and it was pulsed for 10s at 1C. Voltage changes before and after the pulse were recorded, and DCR data at the room temperature 50% SOC and 10% SOC was obtained according to a calculation formula DCR= (voltage after standing - voltage after pulse discharge) / pulse current. Results are shown in Table 1.

### Embodiment 2

S1, nickel sulfate and cobalt sulfate powder were weighed and dissolved in pure water, nickel-cobalt mixed salt solution was prepared according to a Ni: Co molar ratio of 0.92: 0.03, and the total molar concentration of metal ions in the nickel-cobalt mixed salt solution was 2.0mol/L.

S2, sodium aluminate was weighed and added into sodium hydroxide solution, and alkali-aluminum solution with an Al³⁺ molar concentration of 0.5mol/L was prepared.

S3, the nickel-cobalt mixed salt solution obtained in S1, the alkali-aluminum solution obtained in S2 and 12mol/L of ammonia water (complexing agent) were simultaneously pumped into a reaction kettle for a co-precipitation reaction while being stirred. The co-precipitation reaction was divided into four stages, and the temperatures of the four stages were all controlled at 55°C. In the first stage, the nickel-cobalt mixed salt solution with a flow rate of 2.55L/h, the alkali-aluminum solution with a flow rate of 1.85L/h, and the complexing agent solution with a flow rate of 0.5 to 1.5L/h were pumped into the reaction kettle, the pH value was controlled at 11.92±0.1, the stirring rate was 850rpm, and particles in the reaction kettle were grown to 4 to 6µm of D50. In the second stage, the nickel-cobalt mixed salt solution with a flow rate of 2.43L/h, the alkali-aluminum solution with a flow rate of 1.45L/h, and the complexing agent solution with a flow rate of 0.5 to 1.5L/h were pumped into the reaction kettle, the pH value was controlled at 11.65±0.1, the stirring rate was 550rpm, and the particles in the reaction kettle were grown to 6 to 9µm of D50. In the third stage, the nickel-cobalt mixed salt solution with a flow rate of 2.5L/h, the alkali-aluminum solution with a flow rate of 1.65L/h, and the complexing agent solution with a flow rate of 0.5 to 1.5L/h were pumped into the reaction kettle, the pH value was controlled at 11.48±0.1, the stirring rate was 650rpm, and the particles in the reaction kettle were grown to 9 to 13µm. In the fourth stage, the nickel-cobalt mixed salt solution with a flow rate of 2.5L/h, the alkali-aluminum solution with a flow rate of 1.6L/h, and the complexing agent solution with a flow rate of 0.5 to 1.5L/h were pumped into the reaction kettle, the pH value was controlled at 11.54±0.1, the stirring rate was 500rpm, and it was stopped after the particles in the reaction kettle were grown to 15±1µm of D50.

S4, overflow liquid from the reaction kettle in S3 was collected and concentrated, a material obtained by the reaction was firstly washed with sodium hydroxide solution, and then washed with deionized water at 25°C, and the resistivity of the washing water after the washing was less than 0.02cm/µs; the molar concentration of the alkali solution was 4.0 to 5.0mol/L, the drying temperature was 105°C, and the water content was controlled below 0.5wt%. The content of magnetic foreign objects in the precursor should be controlled below 100ppb.

This preparation method may obtain a nickel-cobalt-aluminum precursor Ni_{0.92}Co_{0.03}Al_{0.05}(OH)₂ with D50=14.792, porosity of 9.465, and multilayer annular pore morphology.

S5, the nickel-cobalt-aluminum precursor obtained in S4 was uniformly mixed with a lithium salt and an additive, the lithium salt used in S5 was lithium hydroxide, and the additive was ZrO₂. The molar ratio of (Ni+CO+Al): Li was 1:1.03, and the mass ratio of ZrO₂ to the total mass sum of the precursor and the lithium salt was 0.3%. It was calcined in an oxygen atmosphere furnace, the calcining temperature was 700°C, the calcining time was 10h and the oxygen content in the atmosphere furnace was 90% to 95%, to obtain a first sintering matrix. The first sintering matrix obtained was crushed and washed with deionized water, where the mass ratio of the first sintering matrix to the water was 1:1.5, and the temperature of the deionized water was 25°C. Then it was centrifuged and dried to obtain a dried matrix. The dried matrix obtained was uniformly mixed with a coating material (cerium fluoride), and the mass ratio of the cerium fluoride to the dried matrix was 0.2%. After that, it was calcined in the oxygen atmosphere furnace, where the calcining temperature was 650°C, the calcining time was 8h and the oxygen content in the atmosphere furnace was 90% to 95%, to obtain a positive electrode material of Li_{1.03}Ni_{0.92}Co_{0.03}Al_{0.05}Zr_{0.003}O₂@CeF₄.

The Ni_{0.92}Co_{0.03}Al_{0.05}(OH)₂ nickel-cobalt-aluminum precursor obtained in S4 was cut by using an argon ion section plotter, the section morphology was observed by using a field emission scanning electron microscope, and testing results are shown in Fig. 2.

A porosity method test of a precursor section diagram was the same as Embodiment 1, and results are shown in Table 1.

A manufacturing process of the 18650 cylindrical battery was the same as Embodiment 1, and its electrical performance was tested under the same testing conditions. Results are shown in Table 1, Fig. 5, and Fig. 6.

### Embodiment 3

Referring to S1-S4 in Embodiment 1, a nickel-cobalt-aluminum precursor Ni_{0.875}Co_{0.09}Al_{0.035}(OH)₂ with D50=15.097, porosity of 8.348, and multilayer annular pore morphology may be obtained.

S5, the nickel-cobalt-aluminum precursor obtained in S4 was uniformly mixed with a lithium salt and an additive, the lithium salt used in S5 was lithium hydroxide, and the additive was B₂O₃. The molar ratio of (Ni+CO+Al): Li was 1:1.03, and the mass ratio of B₂O₃ to the total mass sum of the precursor and the lithium salt was 0.15%. It was calcined in an oxygen atmosphere furnace, where the calcining temperature was 720°C, the calcining time was 10h and the oxygen content in the atmosphere furnace was 90% to 95%, to obtain a first sintering matrix. The first sintering matrix obtained was crushed and washed with deionized water, where the mass ratio of the first sintering matrix to the water was 1:1.5, and the temperature of the deionized water was 25°C. It was centrifuged and dried, to obtain a dried matrix. The dried matrix obtained was uniformly mixed with a coating material (zirconium oxide), and the mass ratio of the zirconium oxide to the dried matrix was 0.1%. After that, it was calcined in the oxygen atmosphere furnace, where the calcining temperature was 600°C, the calcining time was 8h and the oxygen content in the atmosphere furnace was 90% to 95%, to obtain a positive electrode material of Li_{1.03}Ni_{0.875}Co_{0.09}Al_{0.035}B_{0.0015}O₂@ZrO₂.

A porosity method test of a precursor section diagram was the same as Embodiment 1, and results are shown in Table 1.

A manufacturing process of the 18650 cylindrical battery was the same as Embodiment 1, and its electrical performance was tested under the same testing conditions. Results are shown in Table 1, Fig. 5, and Fig. 6.

### Embodiment 4

Referring to S1-S4 in Embodiment 2, a nickel-cobalt-aluminum precursor Ni_{0.92}Co_{0.03}Al_{0.05}(OH)₂ with D50=14.792, porosity of 9.465, and multilayer annular pore morphology may be obtained.

S5, the nickel-cobalt-aluminum precursor obtained in S4 was uniformly mixed with a lithium salt and an additive, the lithium salt used in S5 was lithium hydroxide, and the additive was B₂O₃. The molar ratio of (Ni+CO+Al): Li was 1: 1.03, and the mass ratio of B₂O₃ to the total mass sum of the precursor and the lithium salt was 0.1%. It was calcined in an oxygen atmosphere furnace, where the calcining temperature was 700°C, the calcining time was 10h and the oxygen content in the atmosphere furnace was 90% to 95%, to obtain a first sintering matrix. The first sintering matrix was crushed and washed with deionized water, where the mass ratio of the first sintering matrix to the water was 1:1.5, and the temperature of the deionized water was 25°C. Then it was centrifuged and dried to obtain a dried matrix. The mass ratio of a boric acid to the dried matrix was 0.05%. After that, it was calcined in the oxygen atmosphere furnace, where the calcining temperature was 350°C, the calcining time was 5h and the oxygen content in the atmosphere furnace was 80% to 95%, to obtain a positive electrode material of Li_{1.03}Ni_{0.92}Co_{0.03}Al_{0.05}B_{0.001}O₂@Li₃BO₃.

A porosity method test of a precursor section diagram was the same as Embodiment 1, and results are shown in Table 1.

A manufacturing process of the 18650 cylindrical battery was the same as Embodiment 1, and its electrical performance was tested under the same testing conditions. Results are shown in Table 1, Fig. 5, and Fig. 6.

### Contrast example 1

1. A preparation method for a conventional morphology nickel-cobalt-aluminum precursor and sintering of a positive electrode material includes the following steps:
   S1, nickel sulfate and cobalt sulfate powder were weighed, and dissolved in pure water, nickel-cobalt mixed salt solution was prepared according to a Ni: Co molar ratio of 0.875:0.09, and the total molar concentration of metal ions in the nickel-cobalt mixed salt solution was 2.0mol/L.
   S2, sodium aluminate was weighed, and added into sodium hydroxide solution, and alkali-aluminum solution with an Al³⁺ molar concentration of 0.1mol/L was prepared.
   S3, the nickel-cobalt mixed salt solution obtained in S1, the alkali-aluminum solution obtained in S2, and 12mol/L of an ammonia water (complexing agent) were simultaneously pumped into a reaction kettle for a co-precipitation reaction while being stirred. In the growth process of the precursor D50, the stage process adjustment was not performed, the overall temperature in the reaction kettle was controlled at 55°C, the pH value of the entire reaction was maintained between 11.2 and 12.2, and the stirring rate was 600±100rpm. After the particles in the reaction kettle were grown to 15±1µm of D50, the reaction was stopped.
   S4, overflow liquid from the reaction kettle in S3 was collected and concentrated, a material obtained by the reaction was firstly washed with sodium hydroxide solution, and then washed with deionized water at 25°C, and the resistivity of the washing water after the washing was less than 0.02cm/µs; the molar concentration of the alkali solution was 4.0 to 5.0mol/L, the drying temperature was 105°C, and the water content was controlled below 0.5wt%. The content of magnetic foreign objects in the precursor should be controlled below 100ppb.
      This preparation method may obtain a nickel-cobalt-aluminum precursor Ni_{0.875}Co_{0.09}Al_{0.035}(OH)₂ with D50=14.837, porosity of 2.12, and conventional dense morphology.
   S5, the nickel-cobalt-aluminum precursor obtained in S4 was uniformly mixed with a lithium salt and an additive, the lithium salt used in S5 was lithium hydroxide, and the additive was ZrO₂. The molar ratio of (Ni+CO+Al): Li was 1.01:1 to 1.05:1, and the mass ratio of ZrO₂ to the total mass sum of the precursor and the lithium salt was 0.3%. It was calcined in an oxygen atmosphere furnace, where the calcining temperature was 720°C, the calcining time was 10h and the oxygen content in the atmosphere furnace was 90% to 95%, to obtain a first sintering matrix. The first sintering matrix obtained was crushed and washed with deionized water, where the mass ratio of the first sintering matrix to the water was 1:1.5, and the temperature of the deionized water was 25°C. Then it was centrifuged and dried to obtain a dried matrix. The dried matrix obtained was uniformly mixed with a coating material (cerium oxide), and the mass ratio of the cerium oxide to the dried matrix was 0.1%. After that, it was calcined in the oxygen atmosphere furnace, the calcining temperature was 650°C, the calcining time was 8h, the oxygen content in the atmosphere furnace was 90% to 95%, to obtain a positive electrode material of Li_{1.03}Ni_{0.875}Co_{0.09}Al_{0.035}Zr_{0.003}O₂@CeO₂.

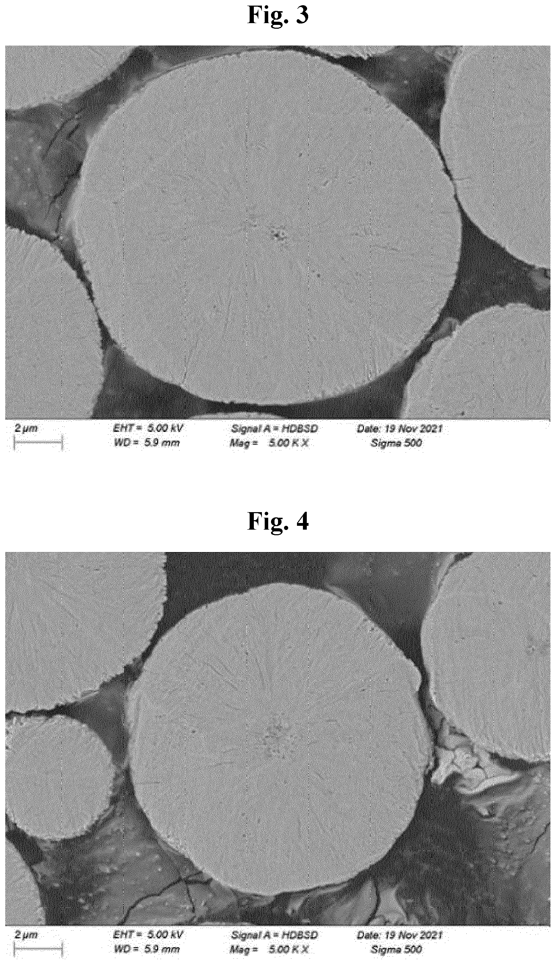

The Ni_{0.875}Co_{0.09}Al_{0.035}(OH)₂ nickel-cobalt-aluminum precursor obtained in S4 was cut by using an argon ion section plotter, the section morphology was observed by using a field emission scanning electron microscope, and testing results were shown in Fig. 3.

A porosity method test of a precursor section diagram was the same as Embodiment 1, and results were shown in Table 1.

A manufacturing process of the 18650 cylindrical battery was the same as Embodiment 1, and its electrical performance was tested under the same testing conditions. Results were shown in Table 1, Fig. 5, and Fig. 6.

### Contrast example 2

S1, nickel sulfate and cobalt sulfate powder were weighed, and dissolved in pure water, nickel-cobalt mixed salt solution was prepared according to a Ni: Co molar ratio of 0.92: 0.03, and the total molar concentration of metal ions in the nickel-cobalt mixed salt solution was 2.0mol/L.

S2, sodium aluminate was weighed and added into sodium hydroxide solution, and alkali-aluminum solution with an Al³⁺ molar concentration of 0.5mol/L was prepared.

S3, the nickel-cobalt mixed salt solution obtained in S1, the alkali-aluminum solution obtained in S2, and 12mol/L of an ammonia water (complexing agent) were simultaneously pumped into a reaction kettle for a co-precipitation reaction while being stirred.

In the growth process of the precursor D50, the stage process adjustment was not performed, the overall temperature in the reaction kettle was controlled at 55°C, the pH value of the entire reaction was maintained between 11.2 and 12.2, and the stirring rate was 600±100rpm. After the particles in the reaction kettle were grown to 15±1µm of D50, the reaction was stopped.

S4, overflow solution of the reaction kettle in S3 was collected and concentrated, a material obtained by the reaction was firstly washed with sodium hydroxide solution, and then washed with deionized water at 25°C, and the resistivity of the washing water after the washing was less than 0.02cm/µs; the molar concentration of the alkali solution was 4.0 to 5.0mol/L, the drying temperature was 105°C, and the water content was controlled below 0.5wt%. The content of magnetic foreign objects in the precursor should be controlled below 100ppb.

This preparation method may obtain a nickel-cobalt-aluminum precursor Ni_{0.92}Co_{0.03}Al_{0.05}(OH)₂ with D50=15.167, porosity of 1.95, and conventional dense morphology.

S5, the nickel-cobalt-aluminum precursor obtained in S4 was uniformly mixed with a lithium salt and an additive, the lithium salt used in S5 was lithium hydroxide, and the additive was ZrO₂. The molar ratio of (Ni+CO+Al): Li was 1.01:1 to 1.05:1, and the mass ratio of ZrO₂ to the total mass sum of the precursor and the lithium salt was 0.3%. It was calcined in an oxygen atmosphere furnace, the calcining temperature was 700°C, the calcining time was 10h, the oxygen content in the atmosphere furnace was 90% to 95%, to obtain a first sintering matrix. The first sintering matrix obtained was crushed and washed with deionized water, where the mass ratio of the first sintering matrix to the water was 1:1.5, and the temperature of the deionized water was 25°C. It was centrifuged and dried to obtain a dried matrix. The mass ratio of a cerium fluoride to the dried matrix was 0.2%. After that, it was calcined in the oxygen atmosphere furnace, the calcining temperature was 650°C, the calcining time was 8h, the oxygen content in the atmosphere furnace was 90% to 95%, to obtain a positive electrode material of Li_{1.03}Ni_{0.92}Co_{0.03}Al_{0.05}Zr_{0.003}O₂@CeF₄.

The Ni_{0.92}Co_{0.003}Al_{0.05}(OH)₂ nickel-cobalt-aluminum precursor obtained in S4 was cut by using an argon ion section plotter, the section morphology was observed by using a field emission scanning electron microscope, and testing results are shown in Fig. 4.

A porosity method test of a precursor section diagram was the same as Embodiment 1, and results are shown in Table 1.

A manufacturing process of the 18650 cylindrical battery was the same as Embodiment 1, and its electrical performance was tested under the same testing conditions. Results are shown in Table 1, Fig. 5, and Fig. 6.

### Contrast example 3

Referring to S1-S4 in Contrast example 1, a nickel-cobalt-aluminum precursor Ni_{0.875}Co_{0.09}Al_{0.035}(OH)₂ with D50=14.837, porosity of 2.12, and conventional dense morphology may be obtained.

S5, the nickel-cobalt-aluminum precursor obtained in S4 was uniformly mixed with a lithium salt and an additive, the lithium salt used in S5 was lithium hydroxide, and the additive was B₂O₃. The molar ratio of (Ni+CO+Al): Li was 1.03: 1, and the mass ratio of B₂O₃ to the total mass sum of the precursor and the lithium salt was 0.15%. It was calcined in an oxygen atmosphere furnace, where the calcining temperature was 720°C, the calcining time was 10h, and the oxygen content in the atmosphere furnace was 90% to 95%, to obtain a first sintering matrix. The first sintering matrix obtained was crushed and washed with deionized water, where the mass ratio of the first sintering matrix to the water was 1:1.5, and the temperature of the deionized water was 25°C. Then it was centrifuged and dried to obtain a dried matrix. The dried matrix was uniformly mixed with a coating material (zirconium oxide), and the mass ratio of the zirconium oxide to the dried matrix was 0.1%. After that, it was calcined in the oxygen atmosphere furnace, where the calcining temperature was 600°C, the calcining time was 8h, the oxygen content in the atmosphere furnace was 90%to 95%, to obtain a positive electrode material of Li_{1.03}Ni_{0.875}Co_{0.09}Al_{0.035}B_{0.0015}O₂@ZrO₂.

A porosity method test of a precursor section diagram was the same as Embodiment 1, and results are shown in Table 1.

A manufacturing process of the 18650 cylindrical battery was the same as Embodiment 1, and its electrical performance was tested under the same testing conditions. Results are shown in Table 1, Fig. 5, and Fig. 6.

### Contrast example 4

Referring to S1-S4 in Contrast example 2, a nickel-cobalt-aluminum precursor Ni_{0.92}Co_{0.03}Al_{0.05} (OH) ₂ with D50=15.167, porosity of 3.34, and conventional dense morphology may be obtained.

S5, the nickel-cobalt-aluminum precursor obtained in S4 was uniformly mixed with a lithium salt and an additive, the lithium salt used in S5 was lithium hydroxide, and the additive was B₂O₃. The molar ratio of (Ni+CO+Al): Li was 1.03: 1, and the mass ratio of B₂O₃ to the total mass sum of the precursor and the lithium salt was 0.1%. It was calcined in an oxygen atmosphere furnace, where the calcining temperature was 700°C, the calcining time was 10h, the oxygen content in the atmosphere furnace was 90% to 95%, to obtain a first sintering matrix was obtained. The first sintering matrix obtained was crushed and washed with deionized water, where the mass ratio of the first sintering matrix to the water was 1:1.5, and the temperature of the deionized water was 25°C. Then it was centrifuged and dried to obtain a dried matrix. The mass ratio of a boric acid to the dried matrix was 0.05%. After that, it was calcined in the oxygen atmosphere furnace, where the calcining temperature was 350°C, the calcining time was 5h, the oxygen content in the atmosphere furnace was 80% to 95%, to obtain a positive electrode material of Li_{1.03}Ni_{0.92}Co_{0.03}Al_{0.05}B_{0.001}O₂@Li₃BO₃.

A porosity method test of a precursor section diagram was the same as Embodiment 1, and results are shown in Table 1.

A manufacturing process of the 18650 cylindrical battery was the same as Embodiment 1, and its electrical performance was tested under the same testing conditions. Results are shown in Table 1, Fig. 5, and Fig. 6.

**Table 1**

| | | Embodi ment 1 | Embodi ment 2 | Embodi ment 3 | Embodi ment 4 | Contrast example 1 | Contrast example 2 | Contrast example 3 | Contra st exampl e 4 |
|---|---|---|---|---|---|---|---|---|---|
| Precursor porosity value | | 8.348 | 9.465 | 10.365 | 8.749 | 2.12 | 1.95 | 3.556 | 4.214 |
| 0.2C discharge capacity (mAh/g) | | 195.18 | 201.13 | 197.84 | 205.98 | 189.96 | 195.43 | 191.43 | 196.87 |
| Initial coulombic efficiency | | 86.16 | 85.31 | 87.13 | 88.47 | 84.97 | 83.85 | 85.33 | 85.96 |
| Cycle retention ratio @ 1000 weeks (%) | | 85.65 | 83.76 | 86.89 | 87.5 | 77.43 | 70.65 | 79.81 | 82.75 |
| DCR performa nce test (mΩ) | 50%S OC@ 25°C | 46.36 | 42.58 | 39.75 | 32.8 | 58.92 | 54.31 | 53.8 | 49.34 |
| | 20%S OC@ 25°C | 47.65 | 43.43 | 41.15 | 34.87 | 60.27 | 56.48 | 56.38 | 52.46 |
| Rate discharge capacity (mAh/g) | 1C | 186.4 | 190.8 | 188.7 | 194.5 | 179.8 | 184.1 | 181.1 | 186.7 |
| | 2C | 183.7 | 187.2 | 185.9 | 191.6 | 177.2 | 180.2 | 177.8 | 183 |
| | 3C | 180.5 | 184.5 | 183.3 | 188.2 | 170.81 | 172.13 | 170.23 | 176.43 |
| Rate discharge capacity retention ratio (%) | 2C/1C | 98.5 | 98.11 | 98.5 | 98.5 | 98.5 | 97.88 | 98.1 | 98 |
| | 3C/1C | 96.83 | 96.69 | 97 | 96.7 | 95.1 | 93.8 | 94 | 94.5 |

Experimental data is divided into two groups: Embodiment 1 and Contrast example 1, and Embodiment 2 and Contrast example 2, it may be seen from the experimental data results that strictly controlling the pH value, the rotational rate, and the solution flow rate in the precursor co-precipitation reaction process in stages may obtain the precursor with the multilayer annular pores, and the precursor with this morphology may not be obtained in the contrast examples in which the reaction stage is not adjusted or not adjusted according to this method. This morphology has a significant impact on the porosity index. The positive electrode material with the same nickel-cobalt-aluminum ratio has the relatively high porosity value and high initial discharge capacity. The positive electrode material inherits the internal spatial structure of the precursor, and may allow the more electrolyte to penetrate, provide the more lithium ion diffusion path, and accelerate the intercalation rate and removal rate of the lithium ions. Therefore, Embodiments 1 and 2 had the higher initial discharge specific capacity and lower internal resistance compared to Contrast examples 1 and 2. Compared with these two groups of data again: Embodiment 3 and Contrast example 3, and Embodiment 4 and Contrast example 4, it may be seen that doping and coating the different elements may improve the electrical performance of the positive electrode material, but still may not improve the advantages inherited from the precursor structure itself.

From the experimental data results, it may also be seen that the positive electrode material with the same nickel-cobalt-aluminum ratio has the relatively high porosity value and better cycle performance. The positive electrode inherits the multi-pore structure between the primary particles from the precursor, and after the precursor is lithiated and sintered, there are many gaps between the primary particles. The elements coated by the second sintering may also penetrate into the surface of the primary particles, as to protect the positive electrode material and improve side reactions caused by the electrolyte to the positive electrode material. It is well known that the morphological change has a profound impact on the cycle stability of a nickel-rich NCA positive electrode. Due to a phase transition near the end of charging, the positive electrode may undergo lattice contraction. Appropriate gaps between the primary particles make the internal strain generated by the phase transition uniformly distributed, and safely dissipate a strain force, thereby the cycle performance is improved.

## Claims

1. A multilayer annular pore nickel-cobalt-aluminum precursor, wherein a chemical formula of the precursor is Ni_{M}Co_{N}Al_{1-M-N}(OH)₂, 0.8≤M≤0.97, 0.02≤N≤0.09, 0.01≤1-M-N≤0.055, wherein D50 is 8 to 20µm, and there is a plurality of layers of annular pores in a secondary spherical particle structure of the precursor, the average porosity value of the section with a single secondary spherical particle or a plurality of secondary spherical particles is 6% to 14%.

2. A preparation method for the multilayer annular pore nickel-cobalt-aluminum precursor according to claim 1, comprising the following steps:
S1, weighing an nickel sulfate and an cobalt sulfate powder, dissolving the nickel sulfate and the cobalt sulfate powder in pure water, and preparing nickel-cobalt mixed salt solution;
S2, weighing an aluminum salt, adding the aluminum salt into sodium hydroxide solution, and preparing alkali-aluminum solution;
S3, pumping the nickel-cobalt mixed salt solution obtained in S1, the alkali-aluminum solution obtained in S2, and a complexing agent into a reaction kettle simultaneously, and performing a co-precipitation reaction in stages; and
S4, after completing the reaction, performing working procedures of solid-liquid separating, washing, drying, mixing, sieving, and demagnetizing on a material obtained from the reaction, to obtain the nickel-cobalt-aluminum precursor.

3. The preparation method for the multilayer annular pore nickel-cobalt-aluminum precursor according to claim 2, wherein a total metal ion concentration of the nickel-cobalt mixed salt solution in S1 is 1.0 to 2.0mol/L.

4. The preparation method for the multilayer annular pore nickel-cobalt-aluminum precursor according to claim 2, wherein the aluminum salt in S2 is sodium aluminate; a concentration of Al³⁺ in the alkali-aluminum solution is 0.1 to 0.5mol/L; and a molar concentration of the sodium hydroxide solution is 5 to 10mol/L.

5. The preparation method for the multilayer annular pore nickel-cobalt-aluminum precursor according to claim 2, wherein the concentration of the complexing agent in S3 is 10 to 15mol/L, and the complexing agent is at least one of EDTA, ammonia water, ammonium carbonate, and ammonium hydrogen carbonate.

6. The preparation method for the multilayer annular pore nickel-cobalt-aluminum precursor according to claim 2, wherein in S3, performing the co-precipitation reaction in four stages: in first stage, it is nucleated and grown to D₁50, 25% of target value ≤ D₁50 < 40% of target value; in second stage, the secondary spherical particle in the reaction kettle is grown to D₂50, 40% of target value ≤ D₂50 < 60% of target value; in third stage, the secondary spherical particle in the reaction kettle is grown to D₃50, 60% of target value≤ D₃50 < 90% of target value; and in fourth stage, the secondary spherical particle in the reaction kettle is grown to target value, and the growth reaction is stopped immediately; and
a flow rate of the nickel-cobalt mixed salt solution in each stage is 1 to 3.5L/h, a flow rate of the alkali-aluminum solution is 1 to 2L/h, a flow rate of the complexing agent is 0.5 to 1.5L/h, a pH is 10 to 12, a reaction temperature in each stage is at 55 to 70°C, and a stirring rate in each stage is 500 to 1000rpm.

7. The preparation method for the multilayer annular pore nickel-cobalt-aluminum precursor according to claim 2, wherein in S4, the washing specifically comprising: washing the material obtained by the reaction with alkali solution firstly, and then washing with deionized water at 25 to 80°C, wherein a resistivity of the washing water is less than 0.02cm/µs after washing; and the alkali solution is at least one of sodium carbonate solution and sodium hydroxide solution, and a molar concentration of the alkali solution is 4.0 to 5.0mol/L.

8. A preparation method for a positive electrode material of a lithium-ion battery, wherein a nickel-cobalt-aluminum precursor is obtained by the preparation method according to claim 2, then the precursor is uniformly mixed with a lithium source and an additive, and performing first sintering, breaking, crushing, water washing and drying, coating, second sintering and sieving, to obtain the positive electrode material.

9. The preparation method for the positive electrode material of the lithium-ion battery according to claim 8, wherein the lithium source is at least one of lithium hydroxide, lithium nitrate, and lithium chloride, the additive is one or more of Zr, Sr, Ti, W, Mg, Y, La, B, and F elements, a coating agent used during the coating is an oxide-compound containing a D element or one or more of lithium compounds containing the D element, and the D element is one or more of Co, Li, B, W, Ti, Ce and Zr; a molar ratio of Ni+CO+Al to Li is 1:1.01 to 1:1.05, and a mass ratio of the additive used to mass sum of the precursor to the lithium salt is 0.1% to 2%; during the first sintering, sintering in an oxygen atmosphere furnace, a calcining temperature of the first sintering is 650 to 800°C, a calcining time of the first sintering is 10 to 15h, a oxygen content in the atmosphere furnace is 85% to 95%, to obtain a first sintering matrix; crushing the obtained first sintering matrix, and washing with a deionized water, wherein a mass ratio of the first sintering matrix to the deionized water is 1:1 to 1:3, and a temperature of the deionized water is 20 to 30°C, then centrifuging, and drying to obtain a dried matrix; and mixing the dried matrix with the coating agent uniformly, wherein a mass ratio of the coating agent to the dried matrix is 0.01% to 5%; and
after that, performing a second sintering, calcining in an oxygen atmosphere furnace, wherein a calcining temperature is 500 to 700°C, a calcining time is 6 to 10h, a oxygen content in the atmosphere furnace is 90% to 95%, and to obtain the positive electrode material.

10. A positive electrode material of a lithium-ion battery, wherein preparing by the preparation method according to claim 8 or 9.
